# EUROPEAN PATENT SPECIFICATION

(11) **EP 3 255 745 B1**
(45) Date of publication and mention of the grant of the patent: **07.08.2019**
(21) Application number: 16173387.8
(22) Date of filing: 07.06.2016
(51) Int. Cl.: H02B 1/20

(54) **WIRE ARRANGEMENT FIXATION COMB AND METHOD OF MAKING THE SAME**
DRAHTANORDNUNGFIXIERUNGSKAMM UND VERFAHREN ZUR HERSTELLUNG DAVON
PEIGNE DE FIXATION DE CÂBLES ET SON PROCÉDÉ DE FABRICATION

(43) Date of publication of application: 13.12.2017
(73) Proprietor: ABB Schweiz AG, 5400 Baden (CH)
(72) Inventor: Weidinger, Libor, 664 67 Syrovice (CZ)
(74) Representative: Schmidt, Karl Michael

(56) References cited:
- EP-A2- 1 465 307
- DE-A1- 4 323 370

## Description

The invention relates to a wire arrangement fixation comb to fix a wire arrangement in low voltage compartment, the comb comprising a number of parallel teeth, between which the wires or cables can be arranged, wherein each tooth is provided on both flanks with bendable or flexible slit flags, which are configured to fix the wires in position, after they are inserted between the teeth of the fixation comb, and method of making the same, according to the preamble of claims 1 and 7.

Wire arrangements in low voltage compartments of for example switchgear panels, are as such state of the art. An example of that is disclosed in the US 2015/0214699 A1 or the EP 1 465 307 A2.

Such a comb has to be fixed on striplike support element in a low voltage compartment. This comb comprises a number of parallel teeth, between which the wires or cables can be arranged. Each tooth is provided on both flanks with bendable or flexible slit flags, which are able fo fix the wire in position, after they will be inserted between the teeth of the fixation comb.

The problem is, that the bendable flags in such known fixation combs are arranged pairwise. This results in that the wires cannot reach an optimal fixation position, with high stiffness.

It is the object of the invention, to enhance the fixation or the stiffness of the wire fixation.

In order to solve the above mentioned problem in the sense of the mentioned object, the invention is, that the flags on both sides are slit in alternating wavelike line, in such, that the wavelined flag of one flank of a first tooth is shifted, and complementarily fits into the wavelined flag of a second directly neighboring tooth, and so on.

In a further advantageous embodiment, a number of predescribed theeth are arranged in parallel on a common strip.

Furthermore advantageous is, that the strip is provided with an incompletely U-profiled socket, whith different long flank lengths. By that, the wire arrangement fixation comb can be fixed on a support frame in a low voltage compartment easily.

In a further advantageous embodiment, the longer flank of the socket is provided in a periodical distance with snap elements. This causes a different bend behavior between the two flanks of the socket strip.

According to that, a further advantageous embodiment is, that the snap elements are structured in such, that a protruded clip is extended inwardly between the opposing flanks of the socket, with a prominent fixation edge. Together with the aforesaid different bend behavior, the longer flank with the implemented snap elements is more elastic than the stiffer shorter flank behind. So the snap element will be pressed towards the stiffer flank, after the comb is inserted over the edge of a support frame.

According to a method of manufacturing a wire arrangement fixation comb as mentioned in one of the foresaid claims, wherein the wire arrangement fixation comb is manufactured via injection molding or casting of plastic or rubber material, the invention is, that the wire arrangement fixation comb, according to one of the aforesaid claims, are casted or molded in one piece, and that the alternating complementary flags between the teeth are separated by slits. With other words, the flags of neighbouring theeth are separated by a wavelike slit. This is then easy to manufacture with a constant and reproducible quality in series.

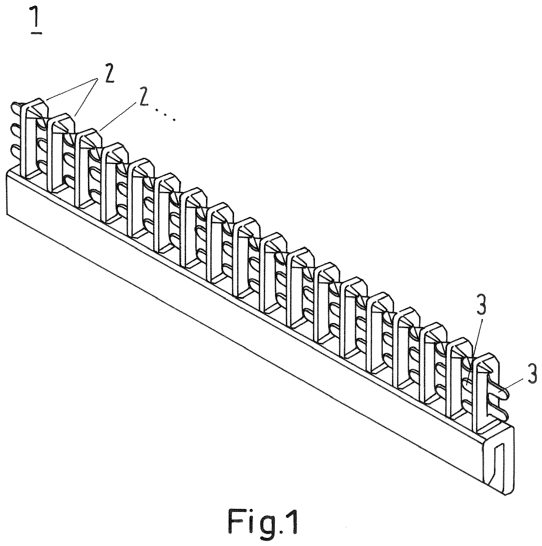

An embodiment of the invention is shown in figure 1:
- Figure 1:: wire arrangement fixation comb, front side
- Figure 2:: wire arrangement fixation comb, rear side
- Figure 3:: tooth with wavelined flags
- Figure 4:: wire arrangement fixation comb, rear side, with detailed view on snap element

Figure 1 shows a wiring arrangement comb 1, with a parallel arrangement of theeth 2. Between the teeth the slit flags 3 are positioned. The wires will be inserted between the teeth and pushed from above towards the socket 4.

By that action, the slit flags will be spreaded. After the wires reached the final position between the teeth, the portions of the slit flags above the wire will bend back and secure the final position of the wires.

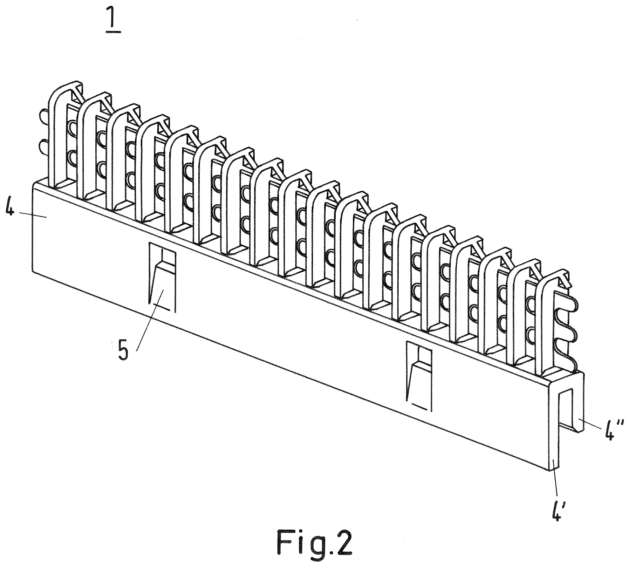

Figure 2 shows the wire arrangement 1, shown in figure 1, here from the rear side.

The socket 4 has an u-profiled cross section, in such, that one flank 4' of the socket is longer than the other flank 4" of the socket.

Furthermore in the longer flank 4' of the socket 4, snap elements 5 are integrally arranged in it.

With these snap elements 5, the wire arrangement fixation comb 1 can be fixed on a supporting sheet, for example in a low voltage compartment.

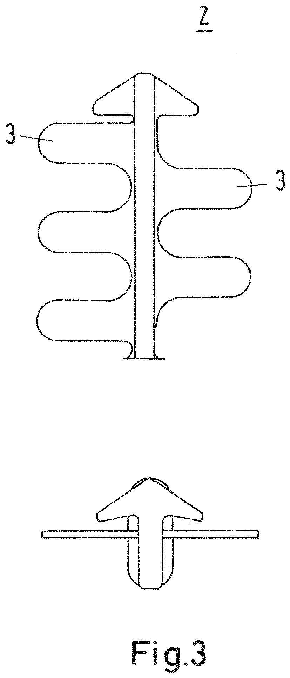

Figure 3 shows a detailed view on a single tooth 2 of the wire arrangement fixation comb 1. By that it is shown, that the slit flags arrangement results from a complementarily shifted half period of the wavelike portion 3 at the left side of the tooth 2, and right side of the tooth.

If teeth are arranged in parallel, the right side of the wavelike flags of a first tooth, accesses complementarily into the left side of the wavelike flags of the second tooth, and so on.

The flags 3 are bendable.

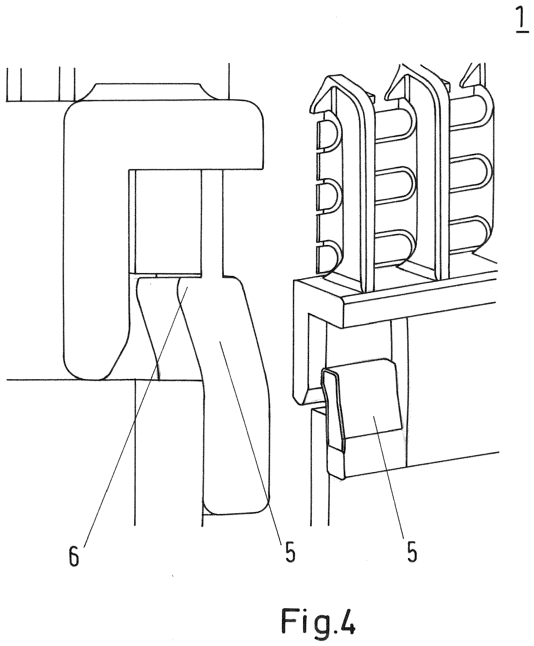

Figure 4 shows a perspective detail view on the portion of the wire arrangement fixation comb 1, which shows the snap element 5 in detail, with the prominent fixation edge, which snaps into an opening of a supporting or carrying sheet, on which the wire arrangement fixation comb 1 is fixed.

### Numbering

1 wire arrangement fixation comb
2 teeth
3 slit flags
4 socket
4', 4" flanks of the socket
5 snap element
6 promiment fixation edge

## Claims

1. Wire arrangement fixation comb (1) configured to fix a wire arrangement in a low voltage compartment, the comb comprising a number of parallel teeth (2), between which the wires or cables can be arranged, wherein each tooth (2) is provided on both flanks with bendable or flexible slit flags (3), which are configured to fix the wires in position, after they are inserted between the teeth of the fixation comb,
**characterized in that** the flags (3) on both flanks are slit in alternating wavelike line, in such, that the wavelined flag of one flank of a first tooth is shifted, and complementarily fits into the wavelined flag of a second directly neighbouring tooth, and so on.

2. Wire arrangement fixation comb, according to claim 1,
**characterized in**
**that** the number of predescribed theeth (2) are arranged in parallel on a common strip.

3. Wire arrangement fixation comb, according to claim 2,
**characterized in**
**that** the strip is provided with an incompletely U-profiled socket (4), with different long flank lengths.

4. Wire arrangement fixation comb, according to claim 3,
**characterized in**
**that** the longer flank of the socket (4) is provided in periodical distances with snap elements (5).

5. Wire arrangement fixation comb, according to claim 4,
**characterized in**
**that** the snap elements (5) are structured in such, that a protruded clip is extended inwardly between the opposing flanks of the socket (4), with a prominent fixation edge (6).

6. Wire arrangement fixation comb, according to claim 5,
**characterized in**
**that** the comb (1) is fixable on a support frame in the aforesaid low voltage compartment.

7. Method of manufacturing a wire arrangement fixation comb according to one of the foresaid claims, wherein the wire arrangement fixation comb is manufactured via injection molding or casting of plastic or rubber material,
**characterized in**
**that** the wire arrangement fixation comb, according to one of the aforesaid claims, is casted or molded in one piece, and that the alternating complementary flags between the teeth are separated by slits.

## Patentansprüche

1. Drahtanordnung-Fixierungskamm (1), dazu gestaltet, eine Drahtanordnung in einem Niederspannungsraum zu fixieren, wobei der Kamm eine Anzahl paralleler Zähne (2) umfasst, zwischen denen die Drähte oder Kabel angeordnet sein können, wobei jeder Zahn (2) an beiden Flanken mit biegsamen oder flexiblen Schlitzfahnen (3) versehen ist, die dazu gestaltet sind, die Drähte in ihrer Position zu fixieren, nachdem sie zwischen die Zähne des Fixierungskamms eingesetzt sind,
**dadurch gekennzeichnet, dass**
die Fahnen (3) an beiden Flanken in einer abwechselnden wellenartigen Linie derart geschlitzt sind, dass die gewellte Fahne einer Flanke eines ersten Zahns verschoben ist und komplementär in die gewellte Fahne eines zweiten, direkt benachbarten Zahns passt und so weiter.

2. Drahtanordnung-Fixierungskamm nach Anspruch 1,
**dadurch gekennzeichnet, dass**
die Anzahl der vorbeschriebenen Zähne (2) parallel auf einem gemeinsamen Streifen angeordnet sind.

3. Drahtanordnung-Fixierungskamm nach Anspruch 2,
**dadurch gekennzeichnet, dass**
der Streifen mit einem Sockel (4) mit unvollständigem U-Profil mit unterschiedlich langen Flankenlängen versehen ist.

4. Drahtanordnung-Fixierungskamm nach Anspruch 3,
**dadurch gekennzeichnet, dass**
die längere Flanke des Sockels (4) in periodischen Abständen mit Rastelementen (5) versehen ist.

5. Drahtanordnung-Fixierungskamm nach Anspruch 4,
**dadurch gekennzeichnet, dass**
die Rastelemente (5) derart strukturiert sind, dass sich eine vorspringende Klammer nach innen zwischen den gegenüberliegenden Flanken des Sockels (4) erstreckt, mit einem hervorstehenden Fixierungsrand (6).

6. Drahtanordnung-Fixierungskamm nach Anspruch 5, **dadurch gekennzeichnet, dass**
der Kamm (1) an einem Trägerrahmen in dem Niederspannungsraum fixierbar ist.

7. Verfahren zum Herstellen eines Drahtanordnung-Fixierungskamms nach einem der vorhergehenden Ansprüche, wobei der Drahtanordnung-Fixierungskamm durch Spritzgießen oder Gießen von Kunststoff- oder Kautschukmaterial hergestellt wird,
**dadurch gekennzeichnet, dass**
der Drahtanordnung-Fixierungskamm nach einem der vorhergehenden Ansprüche in einem Stück gegossen oder ausgeformt wird und dass die abwechselnden komplementären Fahnen zwischen den Zähnen durch Schlitze getrennt werden.

## Revendications

1. Peigne de fixation d'agencement de fils (1) configuré pour fixer un agencement de fils dans un compartiment basse tension, le peigne comprenant un nombre de dents parallèles (2), entre lesquelles les fils, ou câbles, peuvent être agencés, dans lequel chaque dent (2) est disposée sur les deux flancs ayant des languettes fendues pouvant être pliées ou flexibles (3), qui sont configurées pour fixer les fils en position, après qu'ils sont insérés entre les dents du peigne de fixation,
**caractérisé en ce**
**que** les languettes (3) sur les deux flancs sont fendues dans une ligne semblable à une vague alternée de telle sorte que la languette ondulée d'un flanc d'une première dent soit décalée et entre de manière complémentaire dans la languette ondulée d'une seconde dent directement voisine et ainsi de suite.

2. Peigne de fixation d'agencement de fils selon la revendication 1,
**caractérisé en ce**
**que** le nombre de dents prédéterminées (2) sont agencées en parallèle sur une bande commune.

3. Peigne de fixation d'agencement de fils selon la revendication 2,
**caractérisé en ce**
**que** la bande est pourvue d'un support profilé en forme de U incomplet (4) ayant de longues longueurs de flanc différentes.

4. Peigne de fixation d'agencement de fils selon la revendication 3,
**caractérisé en ce**
**que** le flanc plus long du support (4) est pourvu, à des distances périodiques, d'éléments d'encliquetage (5).

5. Peigne de fixation d'agencement de fils selon la revendication 4,
**caractérisé en ce**
**que** les éléments d'encliquetage (5) sont structurés de telle sorte qu'une attache en saillie soit étendue vers l'intérieur entre les flancs opposés du support (4), avec un bord de fixation proéminent (6).

6. Peigne de fixation d'agencement de fils selon la revendication 5,
**caractérisé en ce**
**que** le peigne (1) peut être fixé sur un cadre de support dans le compartiment basse tension précité.

7. Procédé de fabrication d'un peigne de fixation d'agencement de fils selon l'une des revendications précitées, dans lequel le peigne de fixation d'agencement de fils est fabriqué par le biais d'un moulage par injection ou d'un moulage par coulée d'un matériau plastique ou en caoutchouc,
**caractérisé en ce**
**que** le peigne de fixation d'agencement de fils, selon l'une des revendications précitées, est coulé ou moulé en une seule pièce et que les languettes complémentaires alternées entre les dents sont séparées par des fentes.
